Europäisches Patentamt

European Patent Office

Office européen des brevets

(19)

(11) Numéro de publication: **0 181 029 B1**

# FASCICULE DE BREVET EUROPEEN

(12)

(45) Date de publication de fascicule du brevet:
**12.06.91**

(51) Int. Cl.⁵: **C01B 25/222**

(21) Numéro de dépôt: **85201733.4**

(22) Date de dépôt: **24.10.85**

(54) **Procédé continu de préparation d'acide phosphorique et de sulfate de calcium.**

(30) Priorité: **05.11.84 LU 85628**
**21.05.85 LU 85906**

(43) Date de publication de la demande:
**14.05.86 Bulletin 86/20**

(45) Mention de la délivrance du brevet:
**12.06.91 Bulletin 91/24**

(84) Etats contractants désignés:
**BE DE FR GB IT NL SE**

(56) Documents cités:
**WO-A-84/03690**
**GB-A- 2 007 200**
**US-A- 4 276 270**
**US-A- 4 277 448**

(73) Titulaire: **Prayon Développement Société anonyme**
**rue Joseph Wauters, 144**
**B-4130 Engis(BE)**

(72) Inventeur: **Davister, Armand Laurent**
**Quai de la Boverie 98/091**
**B-4000 Liège(BE)**
Inventeur: **Thirion, Francis Arthur**
**rue Sainte Walburge 12**
**B-4000 Liège(BE)**

(74) Mandataire: **Callewaert, Jean et al**
**Bureau Gevers S.A. rue de Livourne 7 bte 1**
**B-1050 Bruxelles(BE)**

## Description

La présente invention est relative à un procédé de préparation d'acide phosphorique, et de sulfate de calcium comme sous-produit suivant lequel on soumet, dans une bouillie contenant du sulfate de calcium en circulation à travers une succession de zones réactionnelles, du phosphate de calcium à une attaque par un mélange d'acides sulfurique et phosphorique avec séparation de sulfate de calcium et extraction d'au moins une partie de l'acide phosphorique de production.

Il s'agit plus particulièrement d'un procédé de préparation d'acide phosphorique à haut titre en $P_2O_5$ et à teneur relativement basse en $H_2SO_4$, d'une part, et d'autre part, de sulfate de calcium, en tant que sous-produit pouvant notamment être constitué de dihydrate, d'hémihydrate $\alpha$, d'anhydrite II ou d'un mélange dans des rapports très variables, de deux ou des trois formes cristallines. Ainsi, lorsqu'il est indiqué que le sulfate de calcium obtenu contient essentiellement l'une de ces formes cristallines, il y a lieu de comprendre que sa teneur est supérieur à celle de chacune des autres formes, mais n'est pas nécessairement supérieure à 50 % de la quantité totale du sulfate de calcium.

Dans la pratique actuelle, on introduit le sulfate, préalablement broyé par voie sèche ou humide, dans une bouillie formée d'acide phosphorique à haut titre en $P_2O_5$ et de cristaux hémihydrate de sulfate de calcium, ce sulfate de calcium étant alors soumis à une opération de séparation, notamment par filtration, où l'acide phosphorique de production est soutiré.

Au stade de la séparation, qui a donc générale ment lieu par filtration, deux techniques sont appliquées :
Dans une première possiblilité, le gâteau hémihydrate obtenu après la filtration est lavé à l'eau et constitue le sous-produit final, le filtrat étant recyclé à l'attaque. La deuxième possibilité consiste, après avoir soutiré l'acide phosphorique, à recristalliser, dans une deuxième étape, l'hémihydrate en dihydrate par une modification des conditions de température et d'acidité, ce sulfate de calcium étant alors de nouveau soumis à une opération de filtration.

Le gâteau de dihydrate ainsi formé est lavé à l'eau et constitue le sous-produit final, tandis que le filtrat est recyclé vers la première étape et les eaux de lavage sont recyclées en amont de la deuxième ou vers la première étape.

Les procédés de voie humide utilisés dans l'industrie, qui permettent la production d'acide phosphorique concentré (plus de 40 % de $P_2O_5$) se sont longtemps heurtés aux difficultés résultant de la production simultanée de sulfate de calcium hémihydraté et de la marche à haute température :

les conditions de travail entraînent des phénomènes de corrosion et d'incrustation qui n'ont pu être surmontés que grâce aux progrès résultant de la recherche scientifique dans les domaines de la chimie, du génie chimique et des matériaux de construction.

Le brevet britannique 313.036 ainsi que le brevet aux U.S.A. n° 1.902.648 décrivent la production d'acide phosphorique accompagnée de l'obtention d'hémihydrate de sulfate de calcium, ce dernier étant ensuite converti en dihydrate en vue de le séparer par une opération de filtration et de lavage.

Le brevet aux U.S.A. n° 1.836.672 concerne un procédé en deux étapes, à savoir une première étape qui comporte la réaction du phosphate et de l'acide sulfurique avec production simultanée d'hémihydrate et d'acide phosphorique concentré, ce dernier étant séparé ensuite par une opération de filtration, tandis que, dans un deuxième stade, l'hémihydrate, encore imbibé d'acide phosphorique, est remis en suspension dans un milieu sulfophosphorique, dans des conditions d'acidité et de température telles que le sulfate de calcium recristallise en dihydrate.

Les brevets belges 660.216 et 683.739 concernent des procédés de préparation d'acide phosphorique dans lesquels la réaction du phosphate avec l'acide sulfurique en milieu dihydrate s'accompagne de la production d'un acide à titre moyen de l'ordre de 30 à 35 % de $P_2O_5$. Le sulfate de calcium obtenu est réattaqué à plus haute température et acidité afin de le purifier et de le recristalliser en hémihydrate $\alpha$, lequel étant ensuite filtré, lavé et mis en stock où il se réhydrate en absorbant son humidité résiduelle.

Le brevet luxembourgeois n° 84.713 du 25 mars 1983 concerne un procédé permettant d'obtenir, d'une part, un acide phosphorique concentré à plus de 40 % de $P_2O_5$ et, d'autre part, par une succession de trois cristallisations, un sulfate de calcium d'un intérêt commercial.

Toutefois, ce procédé étant relativement complex et coûteux, il ne se justifie que dans certains cas, notamment où le sulfate de calcium produit peut être utilisé directement, sans purification ultérieure, pour la fabrication de produits industriellement valables.

Un des buts essentiels de la présente invention est de remédier aux inconvénients desdits procédés connus et de procurer un procédé très souple permettant de contrôler rigoureusement tous les paramètres et d'adapter ainsi ces derniers facilement à la nature des phosphates à traiter et à l'utilisation envisagée du sulfate de calcium de production, tout en réduisant au minimum les coûts énergétiques.

Plus particulièrement, la présente invention vise à produire un acide à haut titre en $P_2O_5$ par

une attaque contrôlée en milieu de sulfate de calcium dihydrate ou hémihydrate $\alpha$, à développer un procédé très souple permettant de maîtriser rigoureusement tous les paramètres dans des limites très étroites et de ce fait rendre ces paramètres très stables quelque soit la nature des phosphates à traiter, qu'ils soient secs ou humides, et à orienter la cristallisation du sulfate de calcium de production selon l'utilisation envisagée de ce dernier, tout en réduisant au minimum les investissements et les coûts énergétiques.

Ainsi, le procédé suivant l'invention vise plus particulièrement, mais pas d'une manière limitative, l'utilisation directe de phosphate humide sans qu'un préséchage soit nécessaire et ceci avec des rendements et des titres en $P_2O_5$ de l'acide phosphorique de production relativement élevés.

A cet effet, suivant l'invention, le procédé tel que défini au début est effectué en au moins deux étapes dans chacune desquelles on règle les débits de la bouillie en circulation, par rapport à un débit de base de la bouillie correspondant au débit évacué des zones réactionnelles, selon les prescriptions suivantes :

- une circulation générale en circuit fermé au travers les zones réactionnelles à un taux compris entre 300 et 4000 % du débit de base,
- une circulation au travers une zone de refroidisssement sous vide à un taux compris entre 2000 et 4000 ù de ce même débit de base, cette zone de refroidissement, dans laquelle règne une pression réduite inférieure à celle qui règne au-dessus de la bouillie des zones réactionnelles, étant en communication avec au moins une de ces dernières, cette pression réduite produisant une évaporation partielle contrôlée de l'eau incluse dans la solution d'acide phosphorique contenue dans la bouillie, d'où résulte dans cette dernière une chute de température contrôlée,
- des circulations locales dans les zones réactionnelles à des taux compris chacun entre 500 et 2000 % du même débit de base,
- la somme de la circulation générale et de la circulation locale supérieure ou égale à 2500 % du débit de base dans chacune des zones où sont ajoutés des réactifs ainsi que dans la zone qui suit immédiatement chacune d'elles dans le circuit de circulation générale,

et on maintient dans les zones réactionnelles un acide phosphorique avec une concentration en $P_2O_5$ entre 15 et 52 %, une teneur en matières solides comprise entre 15 et 62 % et un temps de séjour ou de réaction entre 1 et 23 heures et en ce qu'on maintient en plus dans une première partie de la succession des zones réactionnelles précitées de la première étape, dans laquelle du phosphate tricalcique est introduit, une température comprise entre 75 et 85° C, de préférence entre 78 et 82° C, et une concentration en acide sulfurique entre 0,25 et 0,85 %, de manière à réaliser l'attaque pratiquement complète de ce phosphate tricalcique et en ce qu'on maintient dans une deuxième partie subséquente, communiquant avec la première partie des zones réactionnelles, une température comprise entre 65 et 75° C et une concentration en acide sulfurique comprise entre 1 et 2,5 %, de manière à solubiliser du $P_2O_5$, combiné aux ions $Ca^{++}$, sous forme d'ions $HPO_4^{--}$ et/ou $H_2PO_4^-$, en ce qu'on effectue dans la deuxième étape un traitement ultérieur dans les conditions suivantes :

a) une température comprise entre 30 et 80° C, une concentration en $P_2O_5$ entre 15 et 20 % et une concentration en acide sulfurique comprise entre 4 et 15 %, de manière à obtenir du sulfate de calcium, comme sous-produit, essentiellement sous forme de dihydrate contenant entre 2 et 30 % d'anhydrite II, par une recristallisation d'hémihydrate ou par une cristallisation inchangée ;

b) une température comprise entre 30 et 75° C, une concentration en $P_2O_5$ entre 15 et 20 % et une concentration en acide sulfurique entre 12 et 25 %, de manière à obtenir du sulfate de calcium, comme sous-produit, essentiellement sous forme d'anhydrite II, par une recristallisation de dihydrate ; ou

c) une température comprise entre 75 et 95° C, une concentration en $P_2O_5$ entre 22 et 35 % et une concentration en acide sulfurique comprise entre 4 et 15 %, de manière à obtenir du sulfate de calcium, comme sous-produit, essentiellement sous forme d'hémihydrate contenant entre 2 et 30 % d'anhydrite II, par une recristallisation de dihydrate ou par une cristallisation inchangée de l'hémihydrate ;

les conditions de réaction étant par ailleurs réglées de manière à obtenir un acide phosphorique de production présentant une concentration en $P_2O_5$ comprise entre 33 et 52 % et en $H_2SO_4$ comprise entre 0,25 et 2,5 %.

Les différentes circulations de la bouillie telles que définies ci-dessus ont déjà été divulguées dans le brevet luxembourgeois 78.457 du 4 novembre 1977.

Il a maintenant été constaté, d'une façon imprévue que, par l'application de cette technique de circulation, le nombre d'étapes dans la production d'un acide phosphorique concentré et d'un sulfate de calcium industriellement valable peut être réduit à deux étapes.

Plus particulièrement, il a été trouvé, de façon étonnante, que l'attaque du phosphate en milieu hémihydrate et/ou dihydrate-acide concentré ne devait pas absolument être réalisée dans un milieu déficitaire en sulfate, mais au contraire pourrait se faire avec un excès faible ou nul d'ions sulfate.

D'autres détails et particularités de l'invention resortiront de la description, donnée ci-après, à titre d'exemples non limitaifs avec référence aux dessins annexés, de quelques formes de réalisation particulières du procédé suivant l'invention.

La figure 1 est une vue schématique en élévation d'une installation en une étape, illustrant un mode de circulation des réactifs qui peut être appliqué dans le procédé suivant l'invention.

La figure 2 est une représentation schématique en élévation d'une installation en deux étapes, illustrant également un mode de circulation qui peut être utilisé dans le procédé suivant l'invention.

La figure 3 est une vue schématique en plan de l'installation telle que montrée à la figure 2.

La figure 4 est une vue schématique et en élévation d'une forme de réalisation d'une installation particulière pour la mise en oeuvre du procédé suivant l'invention.

La figure 5 est une vue schématique en plan de l'installation telle que montrée à la figure 4.

Dans ces différentes figures, les mêmes chiffres de référence désignent des éléments identiques ou analogues.

D'une façon générale, l'invention se rapporte à un procédé continu de préparation d'acide phosphorique concentré présentant notamment une concentration en $P_2O_5$ élevée et généralement de l'ordre de 33 à 52 % de $P_2O_5$ avec une teneur relativement faible d'acide sulfurique.

En même temps du sulfate de calcium est produit, en tant que sous-produit, dont la forme cristalline peut être très variée, comme déjà indiqué ci-dessus, mais dont la bonne filtrabilité permet d'atteindre des rendements très élevés.

Ainsi, suivant l'invention ce but est atteint, d'une part, par un contrôle très judicieux des débits et circulations de la bouillie contenant du sulfate de calcium à travers une succession des zones réactionnelles et, d'autre part, par un réglage des différentes concentrations de réaction dans cette bouillie, telles que température, concentration en $P_2O_5$ et en acide sulfurique, teneur en matières solides et temps de séjour ou de réaction.

On soumet, dans cette bouillie, du phosphate de calcium à une attaque par un mélange d'acides sulfurique et phosphorique l'acide phosphorique de production est extrait et du sulfate de calcium est séparé en tant que sous-produit.

Les débits de la bouillie en circulation sont réglés par rapport à un débit de base de cette bouillie correspondant au débit évacué des zones réactionnelles, selon les prescriptions suivantes :

- une circulation générale au travers des zones réactionnelles à un taux comprix entre 3000 et 4000 % du débit de base,

- une circulation au travers une zone de refroidissement sous vide à un taux compris entre 2000 et 4000 % de ce même débit de base, cette zone de refroidissement, dans laquelle règne une pression réduite inférieure à celle qui règne au-dessus de la bouillie des zones réactionnelles, étant en communication avec au moins une de ces dernières, cette pression réduite produisant une évaporation partielle contrôlée de l'eau incluse dans la solution d'acide phosphorique contenue dans la bouillie, d'où résulte dans cette dernière une chute de température contrôlée,

- des circulations locales dans les zones réactionnelles à des taux compris chacun entre 500 et 2000 % du même débit de base,

- la somme de la circulation générale et de la circulation locale supérieure ou égale à 2500 % du débit de base dans chacune des zones où sont ajoutés des réactifs ainsi que dans la zone qui suit immédiatement chacune d'elles dans le circuit de circulation générale.

Pour ce qui concerne les conditions de réaction dans cette bouillie, on maintient dans les zones réactionnelles un acide phosphorique avec une concentration en $P_2O_5$ entre 15 et 52 %, une teneur en matières solides comprise entre 15 et 62 % et un temps de séjour ou de réaction entre 1 et 23 heures et en ce qu'on maintient en plus dans une première partie de la succession des zones réactionnelles précitées de la première étape, dans laquelle du phosphate tricalcique est introduit, une température comprise entre 75 et 85° C, de préférence entre 78 et 82° C, et une concentration en acide sulfurique entre 0,25 et 0,85 %, de manière à réaliser l'attaque pratiquement complète de ce phosphate tricalcique et en ce qu'on maintient dans une deuxième partie subséquente, communiquant avec la première partie des zones réactionnelles, une température comprise entre 65 et 75° C et une concentration en acide sulfurique comprise entre 1 et 2,5 %, de manière à solubiliser du $P_2O_5$, combiné aux ions $Ca^{++}$, sous forme d'ions $HPO_4^{--}$ et/ou $H_2PO_4^-$.

Ensuite, on effectue dans la deuxième étape un traitement ultérieur dans les conditions suivantes :

a) une température comprise entre 30 et 80° C, une concentration en $P_2O_5$ entre 15 et 20 % et une concentration en acide sulfurique comprise entre 4 et 15 %, de manière à obtenir du sulfate de calcium, comme sous-produit, essentiellement sous forme de dihydrate contenant entre 2 et 30 % d'anhydrite II, par une recristallisation d'hémihydrate ou par une cristallisation inchangée ;

b) une température comprise entre 30 et 75° C, une concentration en $P_2O_5$ entre 15 et 20 % et une concentration en acide sulfurique entre 12 et 25 %, de manière à obtenir du sulfate de calcium, comme sous-produit, essentiellement sous forme d'anhydrite II, par une recristallisation de dihydrate ; ou

c) une température comprise entre 75 et 95° C, une concentration en $P_2O_5$ entre 22 et 35 % et une concentration en acide sulfurique comprise entre 4 et 15 %, de manière à obtenir du sulfate de calcium, comme sous-produit, essentiellement sous forme d'hémihydrate contenant entre 2 et 30 % d'anhydrite II, par une recristallisation de dihydrate ou par une cristallisation inchangée de l'hémihydrate ;

les conditions de réaction étant par ailleurs réglées de manière à obtenir un acide phosphorique de production présentant une concentration en $P_2O_5$ comprise entre 33 et 52 % et en $H_2SO_4$ comprise entre 0,25 et 2,5 %.

Ce but est atteint par un contrôle très judicieux des variations de concentrations en $Ca^{++}$ et $SO_4^{--}$ et des variations de température dans les zones réactionnelles.

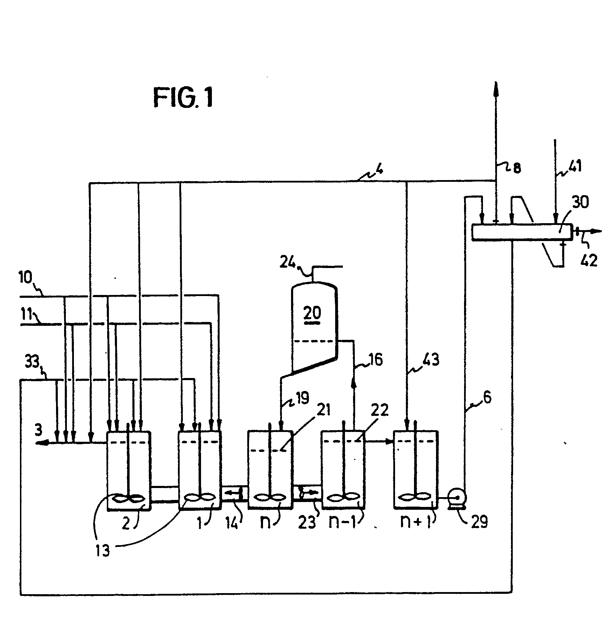

La figure 1 se rapporte à une installation de préparation d'acide phosphorique en une seule étape.

Cette installation comprend une succession de cuves 1 à n, compartimentées ou non, et connectées en série suivant un circuit fermé. De plus, une cuve n + 1 est branchée sur la cuve n - 1 et reliée par l'intermédiaire d'une pompe 29 et d'une conduite 6 à un filtre 30.

Un évaporateur sous vide 20 communique avec les cuves n - 1 et n par l'intermédiaire de colonnes barométriques respectivement 16 et 19, la partie supérieure de l'évaporateur 20 présentant une conduite d'évacuation des vapeurs comme indiqué par la référence 24.

On soumet, dans une bouillie en circulation à travers ces cuves, déterminant une succession de zones réactionnelles, du phosphate de calcium à une attaque par un mélange d'acides sulfurique et phosphorique.

Le phosphate de calcium est introduit en 10, principalement dans la cuve 1 et, éventuellement, pour certains types de phosphates, en partie dans les cuves 2 et/ou 3 pour ne pas perturber l'équilibre de température, d'acidité, de teneur en solide etc. dans les zones réactionnelles.

L'acide sulfurique et l'acide phosphorique sont introduits à l'état dilué en 11 et 33, quelquefois dans une seule cuve, mais le plus souvent dans plusieures des cuves 1 à n.

Dans chacun de ces cuves 1 à n on entretient une circulation locale au moyen d'un ou plusieurs agitateurs 13, et une circulation générale de la bouillie est simultanément maintenue au travers les cuves 1 à n par des circulateurs 14, qui font passer la bouillie d'une cuve à une suivante.

Une partie de la bouillie traversant les différentes cuves 1 à n est soumise à un refroidissement et est, à cet effet, soutirée de la cuve n - 1 par la tuyauterie barométrique 16 qui alimente l'évaporateur refroidisseur 20. Dans celui-ci règne une pression réduite dite "vide", apte à provoquer l'ébullition partielle de l'eau de la bouillie. Après le refroidissement par cette ébullition partielle, la bouillie s'écoule, par la conduite 19 vers la cuve n.

La circulation de la cuve n - 1 à la cuve n au travers de l'évaporateur refroidisseur 20 et des tuyauteries barométriques 16 et 19 peut par exemple être obtenue par le maintien, entre ces deux cuves, d'une différence entre les niveaux 21 et 22. Cette différence résulte de l'action des circulateurs 14, qui recyclent, au travers des cuves 1 à n - 1, la bouillie suivant la circulation générale précitée.

Le "vide" d'intensité désirée est créée dans l'évaporateur refroidisseur 20 par des moyens connus en soi non représentés aux figures, et branché sur la conduite 24, tels qu'un condenseur-éjecteur à vapeur ou un condenseur - pompe à vide. Cette intensité est liée à la quantité de chaleur à dissiper, au débit de la bouillie et à la composition de celle-ci.

L'acheminement de la bouillie vers la filtration peut avoir lieu par des débordements successifs des cuves n - 1 à n + 1 et par la pompe 29 qui l'alimente au filtre 30, généralement situé à un niveau relativement élevé, par la conduite 6.

Le sulfate de calcium est ainsi séparé de la bouillie et une partie 8 de l'acide phosphorique de production est extraite. l'autre partie de cet acide est recyclée par les conduites 4 et 43 vers les cuves 1 à n + 1 permettant d'y contrôler la teneur en $P_2O_5$.

Le gâteau de sulfate de calcium ainsi formé dans le filtre 30 est alors soumis à un lavage par de l'eau chaude, comme indiqué par la flèche 41. Cette eau de lavage contenant donc des acides phosphorique et sulfurique dilués est recyclée par la conduite 33 vers les premières cuves, notamment dans le but de diluer la bouillie dans ces cuves.

Le gâteau ainsi lavé est alors évacué comme indiqué par la flèche 42.

Le débit de la bouillie évacuée des zones réactionnelles, c'est-à-dire dans le présent cas par la conduite 6, constitue le débit de base de la bouillie. Toutes les cuves sont maintenues en légère dépression par rapport à la pression atmosphérique, afin d'assurer une parfaite ventilation des milieux réactionnels et d'éviter une polution. Par suite de la circulation à travers les différentes cuves, les paramètres peuvent varier quelque peu d'une cuve à une autre. Ainsi, il est normal que les concentrations soient quelque peu différentes dans les cuves où sont introduits les réactifs par rapport à celles dans les cuves où aucune introduction de réactif n'a lieu.

Le choix précis des différents paramètres dans le circuit de circulation de la bouillie doit être déterminé en fonction de la nature du phosphate utilisé. Ceci peut toutefois être déterminé expérimentalement dans les limites données ci-dessus et de ce qu'enseigne le brevet luxembourgeois 78.457, dont déjà question ci-dessus.

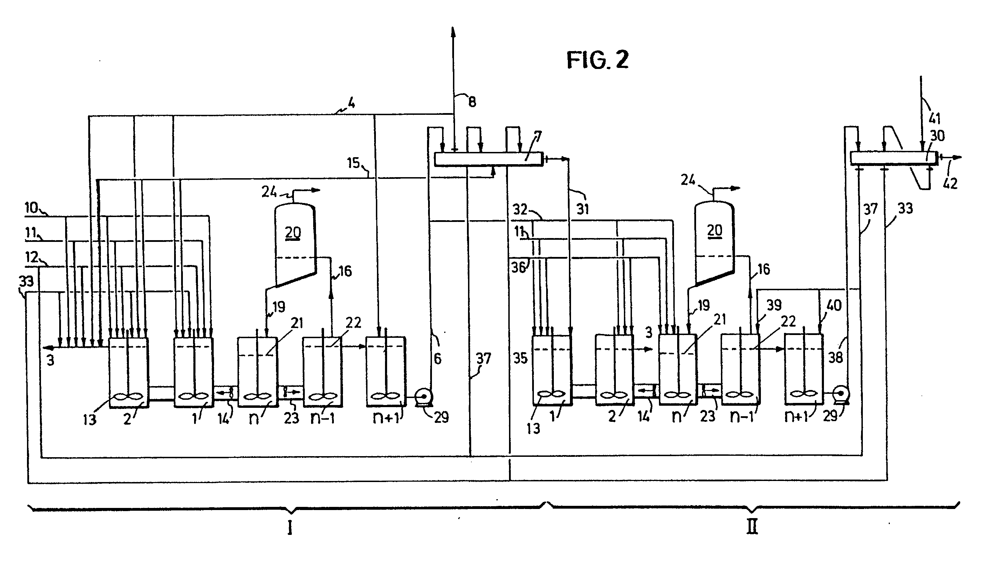

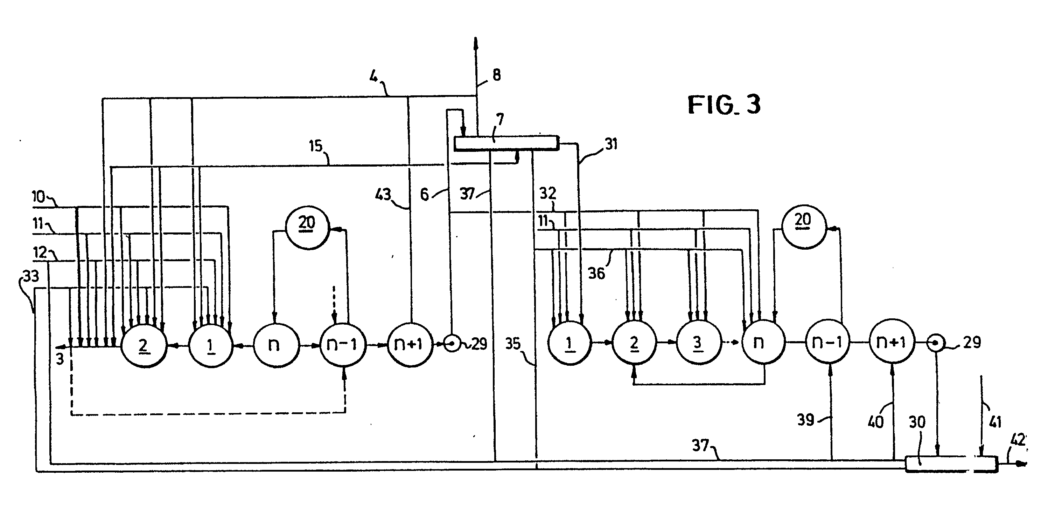

Les figures 2 et 3 concernent une installation de production d'acide phosphorique en deux étapes.

La première étape correspond essentiellement au procédé en une seule étape telle que décrite ci-dessus et illustrée par la figure 1.

La première étape d'un procédé en deux étapes peut se différencier par rapport à un procédé en une étape par le fait que dans celui-ci au moins une partie et de préférence la totalité de la bouillie est filtrée, l'autre partie éventuelle étant directement conduite vers la deuxième étape par les conduites 32.

Comme pour la première étape ou le procédé en une seule étape, la deuxième étape comporte également plusieurs cuves 1 à n + 1 , compartimentées ou non, reliées les unes aux autres, un évaporateur refroidisseur 20 et une pompe 29 alimentant la bouillie, receuillie dans le réacteur n + 1, au filtre 30.

Comme il résulte plus clairement de la figure 3, seulement les cuves 2 à n sont montées en série suivant un circuit fermé, la cuve 1 communiquant uniquement avec la cuve 2.

Un filtre 7 est intercallé entre les deux étapes.

Le gâteau de sulfate de calcium résultant de la filtration dans le filtre 7 est introduit par la conduite 31 dans la cuve 1 où se réalise le repulpage avec des acides ou eaux de lavage recyclés 36 et/ou de l'acide sulfurique 11.

Contrairement à ce qui est le cas pour les cuves 2 à n, la cuve 1 n'est pas traversée par la circulation générale de la bouillie. Ceci permet de maintenir dans la cuve 1 une teneur en $P_2O_5$ inférieure à celle existant dans les cuves 2 à n. Si nécessaire, cette réduction en $P_2O_5$ peut être compensée au moins partiellement par une addition d'acide sulfurique, par exemple pour le traitement de phosphates relativement durs.

La conception et le principe d'utilisation des cuves 2 à n sont identiques à ceux des cuves 1 à n + 1 de la première étape et de l'installation à une étape suivant la figure 1.

Les conditions de traitement du gâteau de filtration retenu sur le filtre 7 varient suivant la nature, l'analyse des phosphates traités et le but poursuivi de la valorisation du sulfate de calcium.

Ainsi, d'une façon générale, si on dispose d'un phosphate à un prix compétitif et d'une possibilité de valoriser ou d'évacuer un sulfate de calcium relativement chargé de $P_2O_5$, on opère, au cours de la deuxième étape, dans les conditions de réaction suivantes :

- une température comprise entre 60 et 90°C, de préférence 75 à 80°C,
- un acide phosphorique avec une concentration en $P_2O_5$ comprise entre 26 et 38 %, de préférence 29 à 35 %,
- une concentration en acide sulfurique comprise entre 6 et 20 %, de préférence 10 à 15 %,
- une teneur en matières solides comprise entre 20 et 34 %, de préférence 24 à 30 %, et
- un temps de séjour ou de réaction entre 1 et 4 heures, de préférence 2 à 3 heures,

ces conditions de réaction étant choisies et combinées dans ces limites d'une manière telle que le sulfate de calcium comprend essentiellement de l'hémihydrate α et une teneur en anhydrite II comprise entre 5 et 30 %, de préférence de 10 à 30 %, du sulfate de calcium produit.

Une partie de la bouillie contenant donc essentiellement de l'hémihydrate α et de l'anhydrite II est conduite vers la cuve n + 1 pour ensuite être acheminée par la pompe 29 à travers de la conduite 38 vers le filtre 30 où la phase liquide est séparée et reconduite, par les conduites 12 et 37, vers le filtre 7 et les premières cuves de la première étape.

Le gâteau de filtration ainsi formé est ensuite lavé par de l'eau, comme indiqué par la flèche 41, et l'eau de lavage est également dirigée, par les conduites 33 et 35, vers le filtre 7 et les premières cuves de la première étape.

Comme dans la première étape, le débit de base de la bouillie correspond à la masse des produits obtenus à partir des réactifs introduits dans les différentes zones réactionnelles par unité de temps.

Si on désire associer la production d'acide phosphorique concentrée à l'obtention d'un très haut rendement en $P_2O_5$, de l'ordre de 98 à 99 %, avec un sulfate de calcium de qualité qui peut être économiquement rendu marchand par des opérations simples de lavage, classification, neutralisation et séchage, l'hémihydrate α et l'anhydrite II, séparés après la première étape, sont recristallisés dans la deuxième étape sous forme d'un mélange de dihydrate et d'anhydrite II.

Les conditions de la conversion en dihydrate et anhydrite II varient suivant la nature et l'analyse des phosphates traités et peuvent généralement être définies comme suit :

- une température comprise entre 30 et 60°C,de préférence 40 à 45°C,
- un acide phosphorique avec une concentra-

tion en $P_2O_5$ comprise entre 15 et 25 %, de préférence 17 à 20 %,

- une concentration en acide sulfurique comprise entre 8 et 18 %, de préférence 12 à 15 %,
- une teneur en matières solides comprise entre 32 et 62 %, de préférence 45 à 58 %, et
- un temps de réaction ou de séjour compris entre 3 et 18 heures, de préférence de 6 à 12 heures, ces conditions de réaction étant choisies et combinées dans ces limites d'une manière telle que le sulfate de calcium comprend essentiellement du dihydrate et une teneur en anhydrite II comprise entre 5 et 30 %, de préférence 5 à 20 %, du sulfate de calcium produit.

L'hémihydrate $\alpha$ cristallise dans le système hexagonal et contient avantageusement, sur base sec à 250°C, de 5,8 à 6,1 % de $H_2O$ cristal, tandis que l'anhydrite II cristallise dans le système orthorhombique et contient avantageusement, sur base sec à 250°C, de 0,2 à 0,6 % de $H_2O$ cristal, comme sulfate de calcium de production ou comme sulfate de calcium séparé à la fin de la première étape.

Le sulfate de calcium produit à la fin de là deuxième étape est essentiellement soit de l'hémihydrate $\alpha$ et de l'anhydrite II contenant avantageusement, sur base sec à 250°C, de 4 à 6 % de $H_2O$ crystal, soit du dihydrate cristallisé dans le système monoclinique prismatique et de l'anhydrite II contenant avantageusement, sur base sec à 250°C, de 17 à 19,5 % de $H_2O$ cristal.

La granulométrie du phosphate de calcium alimenté aux cuves de la première étape ou du procédé en une étape est inférieure à 0,5 mm et 65 % des grains sont de préférence inférieurs ou égaux à 0,150 mm.

Dans le procédé à une étape ou dans la première étape du procédé à deux étapes, si l'usage auquel est destiné l'acide phosphorique le requiert, il est possible d'ajuster la teneur en $SO_4^{--}$ à un niveau supérieur par addition d'acide sulfurique à la bouillie avant la filtration.

Cette opération a de préférence lieu dans une cuve séparée, non représentée aux figures, et si nécessaire, cette cuve est munie d'un dispositif de refroidissement pour éviter un échauffement qui pourrait modifier la cristallisation du sulfate de calcium en augmentant la proportion d'anhydrite II.

L'expérience montre que cette opération supplémentaire permet d'obtenir un mélange d'hémihydrate $\alpha$ et d'anhydrite II facilement filtrable et lavable.

Si l'équilibre des teneurs en fluor, silice active et alumine du phosphate traité n'est pas satisfaisant, on peut bien entendu corriger les déséquilibres éventuels par l'addition de silice active et/ou d'alumine et egalement par mélange d'autres phosphates judicieusement choisis.

Ceci peut être important pour controler la forme et la taille des cristaux de sulfate de calcium obtenus dans les gâteaux de filtration.

Ces techniques sont tout à fait courantes et ont été décrites par Richard L. GILBERT Jr dans Industrial and Engineering Chemistry Process Design and Development vol. 5, N° 4 pages 388 à 391-October 1966.

L'utilisation de circulateurs 14 et 23 à débit variable permet de réaliser, surtout pour des grandes unités, toute combinaison de débit dans laquelle la circulation sur l'évaporateur 20 est plus supérieure ou égale au débit de la circulation générale dans les limites respectives proposées de 2000 à 4000 % et de 300 à 4000 %.

Le débit des circulateurs 23 est la différence du débit qui circule dans l'évaporateur 20 et du débit des circulateurs 14 de recyclage de la circulation générale.

Ceci permet donc de réaliser dans l'évaporateur tous les débits désirés indépendamment du débit choisi pour la circulation générale.

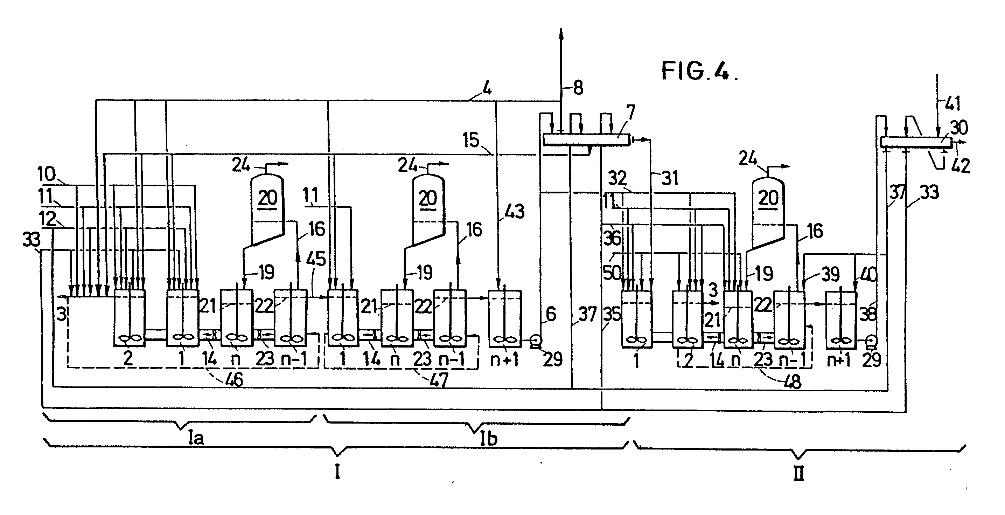

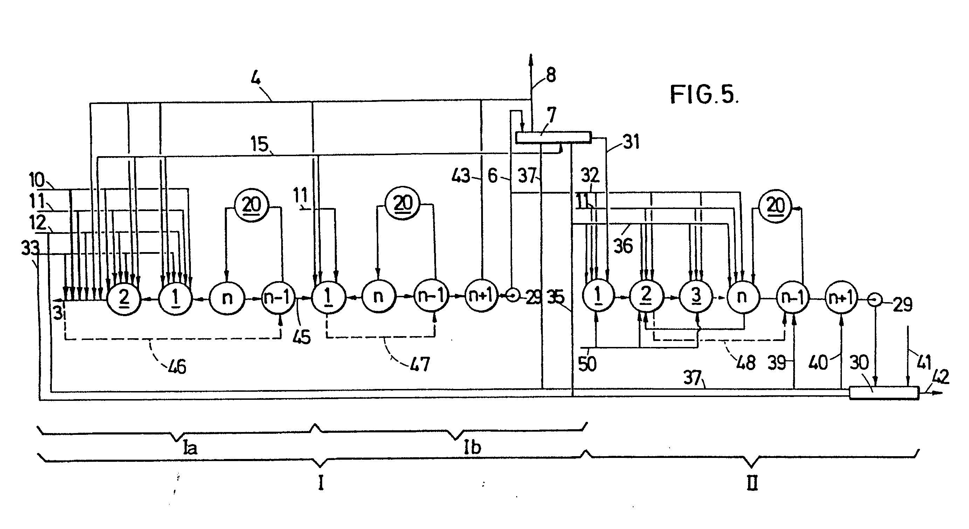

Les figures 4 et 5 concernent une forme de réalisation du procédé suivant l'invention.

Cette forme de réalisation se caractérise surtout par le fait qu'elle permet d'introduire le phosphate de calcium dans la bouillie directement à l'état humide, ce qui peut donc constituer un gain non négligeable en énergie étant donné qu'on évite ainsi un séchage préalable.

Dans un premier cas, le procédé concerne la préparation d'acide phosphorique présentant une concentration en $P_2O_5$ inférieure ou égale à 40 %, généralement à l'ordre de 35 à 38 % de $P_2O_5$.

Le sulfate de calcium, qui est produit, dans un premier temps, se présente, dans ce cas, essentiellement sous la forme de dihydrate.

Si, dans un second cas, on produit un acide phosphorique dont le titre est supérieur à 40 % de $P_2O_5$, le sulfate de calcium obtenu se présente essentiellement sous la forme d'hémihydrate $\alpha$ avec une légère teneur en anhydrite II.

Suivant l'invention, il a été constaté qu'un contrôle rigoureux des variations des concentrations en $Ca^{++}$ et $SO_4^{--}$ et des variations de température dans les zones réactionnelles est très important aussi bien pour le rendement, que le titre de l'acide et la qualité du sulfate de calcium en tant que sous-produit.

Avantageusement, ce contrôle est effectué en maintenant, dans une première partie de ces zones réactionnelles, dans laquelle du phosphate tricalcique est introduit, une température comprise entre 75 et 85°C, de préférence entre 78 et 82°C. et une concentration en acide phosphorique entre 0,25 et 0,85 %. de manière à réaliser l'attaque pratiquement complète de ce sulfate tricalcique par les acides phosphorique et sulfurique présents dans le milieu réactionnel. A ce niveau un maximum d'ions $Ca^{++}$ sont solubiliés.

Dans une deuxième partie subséquente des zones réactionnelles, communiquant avec celles de la première partie, on règle la stabilisation de la phase de la cristallisation avec une solubilisation élevée du $P_2O_5$, combiné aux ions $Ca^{++}$ sous forme d'ions $HPO_4^{--}$ ou $H_2PO_4^-$.

A ce moment, la solubilité des ion $Ca^{++}$ se situe entre 0,02 et 0,08 suite au relèvement de la concentration en ions $SO_4^{--}$ dans des limites supérieures comprises entre 1 et 2.5 % et une température comprise entre 65 et 75 % et la phase liquide a toutes les qualités de l'acide phosphorique de production.

Suivant une forme de réalisation particulière de l'invention, on maintient dans les zones réactionnelles précitées une teneur en matières solides comprise entre 15 % et 45 % (calculée en poids sur matière sèche à 250°C), de préférence entre 20 et 45 %, et un temps de séjour ou de réaction dans ces zones compris entre 1 et 7 heures, de préférence entre 2 et 5 heures.

Suivant une forme de réalisation préférentielle, les zones réactionnelles de chacune de ces deux parties sont raccordées entr'elles suivant un circuit fermé et comprennent au moins une zone de refroidissement.

En se référant aux première et deuxième formes de réalisation, telles que représentées aux figures 1 à 3, on pourrait établir que les deux parties précitées des zones réactionnelles constituent les zones réactionnelles d'un procédé à étape unique, tel que montré à la figure 1 ou les zones réactionnelles de la première étape du procédé à deux étapes, tel qu'illustré par les figures 2 et 3.

Les figures 4 et 5 visent plus particulièrement un procédé suivant lequel on opère en deux étapes séparées successives.

Ainsi, la première étape comprend les deux parties précitées des zones réactionnelles et une séparation, de préférence par filtration, d'au moins une portion du sulfate de calcium obtenu, après les zones réactionnelles de la deuxième partie précitée.

Au cours d'une deuxième étape subséquente, au moins une partie de ce sulfate séparé est repulpée et sensiblement la totalité du sulfate de calcium produit au cours de cette première étape est soumise à un traitement dans des conditions de réaction telles que le sulfate de calcium se présente sous une ou plusieurs formes cristallines prédéterminées, ce sulfate étant ensuite à son tour soumis à une opération de séparation, de préférence une filtration, et un lavage.

Comme pour la première étape, on effectue avantageusement ce traitement subséquent, au cours de la deuxième étape, dans une série de zones réactionnelles successives comprenant une zone de refroidissement.

Etant donné que, dans la deuxième étape, on vise à obtenir un sulfate de calcium, en tant que sous-produit, d'une nature bien déterminée, les conditions de réaction sont réglées généralement dans des limites plus étroites que dans la première étape.

En pratique six cas différents peuvent se produire.

Pour les deux premiers cas, on règle les paramètres au cours de la deuxième étape de manière à maintenir la cristallisation inchangée du sulfate de calcium séparé à la fin de la première étape.

Par conséquent, si, au cours de la première étape, les conditions de réaction sont maintenues d'une manière telle à produire de l'hémihydrate α, dans la deuxième étape, on règle les paramètres de manière à ce que cet hémihydrate, contenant éventuellement quelques pourcentages d'anhydrite II, soit maintenu. D'une manière analogue, lorsque au cours de la première étape on forme du dihydrate, les paramètres de réaction sont réglés au cours de la deuxième étape pour maintenir essentiellement du dihydrate contenant éventuellement quelques pourcentages d'anhydrite II.

Pour les quatre autres cas, on règle les paramètres au cours de la deuxième étape, de manière à convertir le sulfate de calcium obtenu après la première étape en une autre forme cristalline.

Ainsi, si on forme au cours de la première étape de l'hémihydrate α, on règle, au cours de la deuxième étape, les conditions de réaction de manière à obtenir soit essentiellement du dihydrate contenant un léger pourcentage d'anhydrite II soit essentiellement de l'anhydrite II.

Si, par contre, on forme au cours de la première étape du dihydrate, on peut éventuellement régler les conditions de réaction au cours de la deuxième étape de manière á former essentiellement soit de l'hémihydrate α contenant un léger pourcentage d'anhydrite II, soit essentiellement de l'anhydrite II.

Dans les deux premiers cas. c'est-à-dire lorsque les cristallisations restent inchangées au cours de la deuxième étape, on obtient un rendement de l'ordre de 94,5 à 96.5 %, tandis que lorsqu'on réalise au cours de la deuxième étape une recristallisation du sulfate de calcium obtenu de la première étape, le rendement obtenu est généralement supérieur à 98 %.

D'une façon générale. si on dispose d'un phosphate à un prix compétitif et d'une possibilité de valoriser et d'évacuer un sulfate de calcium relativement chargé en $P_2O_5$, on opère dans les conditions de réaction des deux premiers cas, ces conditions pouvant être plus particulièrement comme suit :

- une température comprise entre 70 et 85° C, de préférence 75 à 80 °C,
- un acide phosphorique avec une concentration en $P_2O_5$ comprise entre 15 et 25 %, de préférence 17 à 20 %,
- une concentration en acide sulfurique comprise entre 5 et 15 %, de préférence 8 à 12 %,
- une teneur en matières solides comprise entre 20 et 45 %, de préférence 25 à 35 %, et
- un temps de séjour ou de réaction compris entre 0,5 et 3 heures, de préférence 1 à 1,5 heure.

Si on désire associer la production d'acide phosphorique concentré à l'obtention d'un très haut rendement en $P_2O_5$, de l'ordre de 98 à 99 % , avec un sulfate de calcium de qualité qui peut être économiquement rendu marchant par des opérations simples de lavage, classification, neutralisation et séchage, on soumet le sulfate de calcium obtenu au cours de la première étape à une recristallisation au cours de la deuxième étape.

Plus particulièrement, lorsqu'au cours de la première étape on obtient essentiellement du dihydrate, on opère au cours de la deuxième étape dans les conditions de réaction suivantes, en fonction de la nature et la composition chimique des phosphates traités :

- une température comprise entre 85 et 95 °C, pour la formation d'hémihydrate α, et une température comprise entre 65 et 75 °C, pour la formation d'anhydrite II,
- un acide phosphorique avec une concentration en $P_2O_5$ comprise entre 19 et 28 %, pour la formation d'hemihydrate α, et comprise entre 15 et 18 %, pour la formation d'anhydrite II,
- une concentration en acide sulfurique comprise entre 6 et 15 % pour la formation d'hémihydrate α, et de 15 à 25 %, de préférence de 15 à 20 %, pour la formation d'anhydrite II,
- une teneur en matières solides comprise entre 20 et 45 %, de préférence 25 à 35 %, et
- un temps de réaction ou de séjour compris entre 0,5 et 3 heures, de préférence 1 à 1,5 heure.

Ces conditions de réaction sont choisies et combinées dans les limites précitées d'une manière telle que le sulfate de calcium comprend essentiellement soit de l'hémihydrate a, soit de l'anhydrite II, soit un hémihydrate α avec une teneur en anhydrite II comprise entre 5 et 20 %, de préférence 5 à 15 %, du sulfate de calcium produit.

Le repulpage, dans la deuxième étape du sulfate de calcium, séparé dans la première étape, est de préférence effectué dans une zone réactionnelle séparée prévue en amont d'une série d'autres zones réactionnelles racccordées entr'elles suivant un circuit fermé, de manière à maintenir dans cette zone de repulpage une teneur en $P_2O_5$ inférieure à celle existant dans les autres zones.

Si nécessaire, cette réduction en $P_2O_5$ est compensée, au moins partiellement, par une addition d'acide sulfurique, par exemple, pour le traitement de phosphates relativement durs.

Suivant l'invention, il a été constaté qu'un contrôle très efficace et rigoureux des conditions de réaction et plus particulièrement des paramètres, tels que définis ci-dessus, peut être obtenu en réglant, au moins dans chacune des première et deuxième partie précitées des zones réactionnelles, le débit de la bouillie en circulation par rapport à un débit de base de la bouillie, correspondant au débit évacué des zones réactionnelles, selon les mêmes prescriptions que celles définies en rapport avec les deux premières formes de réalisation.

D'une manière analogue, on règle également les débits en circulation dans les zones réactionnelles de la deuxième étape, sensiblement de la même façon que dans les zones réactionnelles des deux parties précitées, appartenant donc à la première étape.

Chaque étape est caractérisée par le fait qu'elle termine par une séparation au moin partielle du sulfate de calcium produit, cette séparation ayant de préférence lieu par filtration.

Par ailleurs, dans chacun des étapes, les zones de circulation sont déterminées par une succession de cuves. compartimentées ou non, connectées en série suivant un circuit fermé.

Ainsi, la première partie la de la première étape 1 comprend 1 à n cuves , n étant déterminé en fonction de la nature du sulfate à traiter, de la capacité de l'installation et des cuves même.

D'une façon générale, il a été constaté que des résultats très favorables sont déjà obtenus lorsque la première partie comprend 2 à 3 cuves.

D'une manière analogue la deuxième partie lb de la première étape comprend également une série de cuves 1 à n, compartimentées ou non, et connectées en série suivant un circuit fermé, n pouvant également varier suivant le type d'installation et de phosphate à traiter. Comme pour la première partie, il a été constaté que des résultats favorables sont obtenus lorsque n = 2 ou 3.

Ces deux parties 1a et 1b sont raccordées entr'elles comme indiqué par la flèche 45 et présentent tout au plus, une recirculation de 10 à 15 % de la partie la vers la partie 1b, mais de préférence aucune telle recirculation.

La deuxième étape II se compose également d'une série de cuves 1 à n, compartimentées ou non, et connectées en série, n dépendant donc également de caractéristiques de l'installation et de la nature du phosphate à traîter.

Le nombre de cuves, c'est-à-dire "n", peut être identique ou différent dans les parties la et 1b et dans la deuxième étape II.

Des résultats très satisfaisants ont été obtenus lorsque n = 2 ou 3 dans cette deuxième étape II.

La deuxième étape de cette troisième forme de réalisation peut être identique à la deuxième étape de la deuxième forme de réalisation montrée aux figures 2 et 3, de sorte que pour la description et le fonctionnement de cette deuxième étape, il y a lieu de se référer à ces figures 2 et 3 et la description correspondante de celle-ci.

La première étape 1 se caractérise donc par le fait qu'elle comporte deux parties 1a et 1b formées chacune d'une série de cuves connectées en série suivant des circuits fermés, comme indiqué schématiquement par les lignes en traits interrompus 46 respectivement 47.

Dans la partie la on maintient avantageusement une température comprise entre 75 et 85°C et une concentration en acide sulfurique entre 0,25 et 0,85 %, tandis que, dans la deuxième partie 1b, la température est maintenue entre 65 et 75°C avec une concentration en acide sulfurique comprise entre 1 et 2,5 %.

Par ailleurs, on recycle tout au plus 10 %, et de préférence 0 % comme dans la forme de réalisation montrée aux figures 4 et 5, de la bouillie sortant de la deuxième partie 1b des zones réactionnelles vers la première partie 1a.

Comme déjà signalé ci-dessus, les conditions de traitement du gâteau de filtration retenu sur le filtre 7 varient suivant la nature, la composition chimique des phosphates traitées et le but poursuivi de la valorisation du sulfate de calcium produit.

Ainsi, la totalité du sulphate de calcium provenant de la deuxième' partie 1b de 1a première étape est soumise, au cours de la deuxième étape subséquente, à un traitement dans les conditions générales de réaction suivantes :

- une température comprise entre 30 et 150°C, p.ex. de 60 à 105°C,
- une concentration en $P_2O_5$ comprise entre 15 et 38%, p.ex. de 15 à 28%,
- une concentration en acide sulfurique comprise entre 4 et 25%,
- une teneur en matières solides comprise entre 20 et 62%, p.ex. de 20 à 45% et,
- un temps de séjour ou de réaction compris entre 0,5 et 18 heures, notamment de 0,5 à 3 heures.

Le choix précis des différents paramètres dans les limites des conditions de réaction définies ci-dessus peuvent généralement être déterminées expérimentalement en fonction de la nature du phosphate utilisé et du sulfate de calcium produit.

L'hémihydrate alpha cristallise dans le système hexagonal et contient avantageusement, sur base sec à 250°C, de 5,8 à 6,1% de $H_2O$ cristal, l'anhydrite II cristallise dans le système orthorombique et contient avantageusement, sur base sec à 250°C, de 0,2 à 0,6% de $H_2O$ cristal, tandis que le dihydrate cristallise dans le système prismatique monoclinique et contient avantageusement, sur base sec à 250°C, de 19,8 à 20,2% d'$H_2O$ cristal.

Le sulfate de calcium produit à la fin de la deuxième étape est essentiellement soit de l'hémihydrate alpha et de l'anhydrite II contenant avantageusement, sur base sec à 250°C, de 4 à 6,1% de $D_2O$ cristal, soit du dihydrate et de l'anhydrite II contenant avantageusement sur base sec à 250°C, de 17 à 20,2% de $H_2O$ cristal, soit de l'anhydrite II.

Avantageusement, la granulométrie d'au moins 95% du phosphate de calcium alimenté aux cuves de la première étape est inférieure à 0,5 mm et 60 à 70% des grains sont de préférence inférieurs ou égaux à 0,150 mm.

Si l'équilibre des teneurs en fluor, silice active et alumine du phosphate traité n'est pas satisfaisant, on peut bien entendu corriger les déséquilibres éventuels par l'addition de silice active et/ou d'alumine et également par mélange d'autres phosphates judicieusement choisis.

Ceci peut être important pour contrôler la forme et la taille des cristaux de sulfate de calcium obtenus dans les gâteaux de filtration.

Ces techniques sont tout à fait courantes et ont été décrites par Richard L. Gilbert Jr. dans Industrial and Engineering Chemistry process Design and Development vol. 5, N° 4 pages 388 à 391 - October 1966.

Avantageusement, il a été constaté , suivant l'invention que cette addition de silice active et/ou d'alumine doit avoir lieu dans une des zones réactionnelles où on introduit le phosphate de calcium à traiter ou dans une ou plusieurs zones voisines de celle-ci, c'est-à-dire tout à fait au début de la partie 1a.

Enfin, ci-après sont donnés quelques exemples concrets du procédé suivant l'invention appliqués dans les installations telles que montrées aux figures 3 et 4.

Exemple 1:

Du phosphate Maroc 70-72 BPL et de l'acide sulfurique concentré à 98 % ont été alimentés dans les premières cuves de la première étape de l'installation montrée aux figures 4 et 5.
La teneur en matières solides dans ces cuves a été contrôlée par le recyclage d'acide phosphorique produit, comme indiqué par la conduite 4, tandis que le titre en $P_2O_5$ de la phase liquide a été maintenu par le recyclage des filtrats en provenance des filtres 7 et 30 à travers les. conduites 12, 15 et 33.

La quantité de réactifs ajoutés et recyclés était telle à maintenir un débit de base de 10 m'/t $P_2O_5$ produite pour une rétension de 3 heures dans le volume réactionnel, avec une circulation générale et une circulation sur l'évaporateur réglées toutes deux à 4000 %. Les conditions de réaction dans les cuves de la première étape étaient les suivantes : température 82° C à la première partie la et 72° C à la deuxième partie 1b ; teneur en matières solides dans la bouillie de réaction : 34 % ; teneur en $P_2O_5$ dans la phase liquide : 36 % ; teneur en $H_2SO_4$ dans la phase liquide : 0,3 % à la première partie 1a et 1,2 % à la deuxième partie 1b.

Le sulfate de calcium précipitait sous forme dihydrate.

Les cristaux maclés étaient de bonne filtrabilité avec un rendement de l'attaque de 96,5 % et les matières solides formées de dihydrate contenaient environ 20 % d'eau cristal et 1,6 % de $P_2O_5$ total dans la phase solide, calculé sur sec à 250° C.

Dans un premier test le débit de base de la bouillie a été conduit au filtre 7 de cette installation.

Le gâteau de filtration ainsi formé de dihydrate a été repulpé dans la cuve 1 de la deuxième étape avec des liquides provenant du filtre 30. Dans les cuves de la deuxième étape, les conditions de température, de concentration en $H_2SO_4$ et de concentration en $P_2O_5$ sont successivement réglées pour obtenir de l'hémihydrate alpha et de l'anhydrite II à raison de 5 % du sulfate de calcium total.

Ainsi, la température a été maintenue à 90° C par injection de vapeur la teneur en matières solides a été ramenée à 30% par recyclage des liquides provenant du filtre 30, la teneur en $P_2O_5$ a été maintenue à 24 % dans l'acide phosphorique et la teneur en acide sulfurique libre a été maintenue à 15 %.

Le débit de base à la deuxième étape était de 9 $m^3$ avec une rétention de 1 heure dans le volume réactionnel et une circulation générale de 2500 %. Le gâteau de filtration contenant de l'hémihydrate alpha et de l'anhydrite II déchargé au filtre 30 contenait 0,30 % de $P_2O_5$ et 5,6 % de $H_2O$ C sur base du produit séché à 250° C, la teneur en humidité du gâteau étant de 18 %.

Enfin, dans un deuxième test, la totalité du débit de base de la bouillie provenant de la première étape a été conduite vers le filtre 7 et le gâteau de dihydrate obtenu a été retraité, dans la deuxième étape, en dihydrate par modification de la température à 75° C et des acidités phosphoriques et sulfuriques des liquides. Les conditions opératoires étaient les suivantes : teneur en matières solides dans la bouillie : 38 % ; teneur en $P_2O_5$ : 17 % et teneur en $H_2SO_4$ : 10 %. Le débit de base était de 6,5 $m^3$ avec une durée de rétention dans les zones réactionnelles de 1,5 heure, une circulation générale de 2500 % et une circulation sur l'évaporateur réglée à 3500 %. Le gâteau de filtration déchargé au filtre 30 était essentiellement formé de dihydrate contenant 0,95 % de $P_2O_5$, 19,6 % $H_2O$ C (sur base d'un produit séché à 250° C, et une teneur en humidité de 34 %).

Exemple 2

Du phosphate de Floride 70 72 BPL a été alimenté dans les cuves de la première étape de l'installation montrée aux figures 4 et 5, ensemble avec de l'acide sulfurique concentré à 98 %. La teneur en matières solides dans ces cuves et le titre en $P_2O_5$ était de 11 $m^3$/t $P_2O_5$ produite avec un temps de rétention de 3,5 heures dans les zones réactionnelles, une circulation générale de 2500 % et une circulation sur l'évaporateur réglée à 4000 %.

Les conditions de réaction dans les différentes cuves de cette première étape étaient les suivantes : température : 78° C à la première partie 1a et 70° C à la deuxième partie 1b ; teneur en matières solides dans la bouillie : 33 % ; teneur en $P_2O_5$ dans la phase liquide : 38 % ; teneur en $H_2SO_4$ dans la phase liquide : 0,5 % à la première partie 1a et 1,5 % à la deuxième partie 1b. Le sulfate de calcium précipité sous forme de dihydrate se présentait sous forme de cristaux maclés de bonne filtrabilité. Le rendement de l'attaque était de 95,5 % et le gâteau de filtration contenait environ 20 % $H_2O$ C et 1,5 % de $P_2O_5$ total dans la phase solide, calculé sur sec à 250° C.

Dans un premier test, tout le débit de base de la bouillie a été filtré et le gâteau lavé par les filtrats n° 35 et 37 et déchargé. Il contenait une teneur en humidité de 40 %.

Le gâteau obtenu a été retraité, dans la deuxième étape, en dihydrate à une température de 80° C, une teneur en matières solides dans la bouillie de 34 %, une teneur en $P_2O_5$ : 20 % et une teneur en $H_2SO_4$ : 8 %. Le débit de base était de 8 $m^3$ avec une durée de rétention dans les zones réactionnelles de 1,5 heure, une circulation générale de 2500 % et une circulation sur l'évaporateur réglée à 3000 %. le gâteau de filtration déchargé au filtre 30 était formé de dihydrate contenant 1,1 % de $P_2O_5$, 19,8 % $H_2O$ C (sur base d'un produit séché à 250° C), et une teneur en humidité de 36 %.

Dans un deuxième test, effectué dans la même installation, 100 % du débit de base de la bouillie ont été amenés sur le filtre 7 et le gâteau de filtration, formé de dihydrate, a été repulpé avec des liquides provenant du filtre 30.

les conditions de réaction ont été réglées dans la deuxième étape de manière à obtenir de l'hémihydrate $\alpha$ avec de l'anhydrite II en raison de 5 % du sulfate de calcium total.

Ainsi, la température a été maintenue à 92°C par injection de vapeur 50. La teneur en matières solides dans la bouillie a été ramenée à 28 % par recyclage des liquides provenant du filtre 30. La teneur en $P_2O_5$ était de 22 % et celle en $H_2SO_4$ libre était de 10 %. Le débit de base de la deuxième étape était de 10 m³ avec une durée de rétention de 1,0 heure dans les zones réactionnelles et une circulation générale de 2500 %. Le gâteau d'hémihydrate et d'anhydrite II déchargé au filtre 30 contenait 0,35 % de $P_2O_5$ avec 5,8 % $H_2O$ C (sur base du produit séché à 250°C), la teneur en humidité du gâteau étant de 20 %.

Dans un troisième test, également effectué dans une installation du type de celui représenté aux figures, la totalité du débit de base de la bouillie de la première étape a été amenée vers le filtre 7 et le gâteau de filtration obtenu a été converti en anhydrite II en abaissant la température à 55°C, ce dernier formant 95 % du sulfate de calcium total, les 5 % restant étant du dihydrate. Les autres conditions de réaction étaient les suivantes : une teneur en matières solides dans la bouillie de 40 % et, dans la phase liquide, une teneur en $P_2O_5$ de 15 % et en $H_2SO_4$ de 25 %. Le débit de base était de 6 m³ avec une durée de rétention de 1 heure dans les zones réactionnelles, une circulation générale de 2500 % et une circulation sur l'évaporateur réglée à 3500 %. Le gâteau de filtration, constitué essentiellement d'anhydrite II déchargé au filtre, contenait 0,38 % de $P_2O_5$ et 0,7 % $H_2O$ C (sur base du produit séché à 250°C), la teneur en humidité du gâteau étant de 40%.

Exemple 3:

Un mélange de phosphates KOLA-MAROC dans les proportions respectives 70/30 a été alimenté dans la première cuve de la première étape de l'installation montrée aux figures 4 et 5.

Les conditions opératoires étaient les suivantes : débit de base de 10 m³/t $P_2O_5$ produite avec une durée de rétention dans les zones réactionnelles de 3,5 heures, une circulation générale de 500 % et une circulation sur l'évaporateur de 4000 %, une température de 80°C dans la partie 1a et de 72°C dans la partie 1b ; une teneur en $H_2SO_4$ dans la phase liquide de : 0,4 % dans la première partie 1a et 1,5 % dans la deuxième partie 1b. Le sulfate de calcium précipitait sous forme de dihydrate. Ce sulfate se présentait sous forme de cristaux maclés de bonne filtrabilité. Le rendement de l'attaque était de 97 % et les matières solides dihydrate contenaient environ 19 % d'$H_2O$ C et 1,0 % de $P_2O_5$ total dans la phase solide, calculé sur un produit séché à 250°C.

Dans un premier test effectué dans une installation du type représenté aux figures 4 et 5, la totalité de la bouillie extraite de la première phase a été filtrée et, dans la deuxième étape, le gâteau a été repulpé dans des conditions pour obtenir de l'hémihydrate α et de l'anhydrite II formant 5 % du sulfate de calcium total.

Ainsi, la température était de 95°C, la teneur en matières solides était de 30 %, et la teneur en $H_2SO_4$ libre de 15 %. Le débit de base dans cette deuxième étape était de 9m³ avec une durée de rétention de 1,0 heure dans les zones réactionnelles et une circulation générale de 1500%. Le gâteau d'hémihydrate α et d'anhydrite II déchargé au filtre contenait 0,28 % de $P_2O_5$ et 5,8 % $H_2O$ C (sur base du produit séché à 250°C), la teneur en humidité du gâteau étant de 18,5 %.

Dans un deuxième test, également effectué dans une installation du type tel que représenté aux figures 4 et 5, la totalité du débit de base de la bouillie provenant de la première étape a été conduite vers le filtre 7. Le gâteau de dihydrate obtenu a ensuite été attaqué de nouveau en dihydrate à la température de 68°C. Les autres conditions opératoires étaient les suivantes : teneur en matières solides dans la bouillie : 38 %, teneur dans la phase liquide en $P_2O_5$ de 19 % et en $H_2SO_4$ de 9 %. Le débit de base était de 9m³ avec une durée de rétention de 1,2 heure dans les zones réactionnelles, une circulation générale de 2500 % et une circulation sur l'évaporateur réglée à 4000 %.

Le gâteau formé de dihydrate et d'anhydrite II (3 % du sulfate de calcium déchargé au filtre), contenait 0,85 % de $P_2O_5$ et 18,5 % $H_2O$ C (sur base du produit séché à 250°C), la teneur en humidité du gâteau étant de 35 %.

Exemple 4

Du phosphate Maroc 70-72 BPL et de l'acide sulfurique concentré à 98 % ont été alimentés dans les premières cuves de la première étape de l'installation montrée aux figures 4 et 5.

La teneur en matière solide dans ces cuves a été contrôlée par le recyclage d'acide phosphorique produit, comme indiqué par la conduite 4, tandis que le titre en $P_2O_5$ de la phase liquide a été maintenu par le recyclage des filtrats en provenance des filtres 7 et 30 à travers les conduites 12, 15 et 33.

La quantité de réactifs ajoutés et recyclés était telle à maintenir un débit de base de 12 m³/t $P_2O_5$ produite pour une rétension de 3 heures dans le volume réactionnel, avec une circulation générale et une circulation sur l'évaporateur réglées toutes deux à 4000 %. les conditions de réaction dans les cuves de la première étape étaient les suivantes : température : 82°C à la partie 1a et 72°C à la partie 1b ; teneur en matière solide dans la bouillie de réaction : 24 % ; teneur en $P_2O_5$ dans la phase liquide : 43 % ; teneur en $H_2SO_4$ dans la phase liquide : 0,4 % à la partie 1a et 1,2 % à la partie 1b.

Le sulfate de calcium précipitait sous forme d'hémihydrate $\alpha$ et d'anhydrite II, la teneur en $CaSO_4$ étant de 5 % de la quantité totale de sulfate de calcium.

Les cristaux maclés obtenus étaient de bonne filtrabilité avec un rendement de l'attaque de 96,5 % et les matières solides formées d'hémihydrate $\alpha$ et d'anhydrite II contenaient environ 6 % d'eau cristale et 1,6 % de $P_2O_5$ total dans la phase solide, calculé sur sec à 250° C.

Dans un premier test, 80 % du débit de base de la bouillie ont été conduits au filtre 7 de cette installation.

La gâteau de filtration ainsi formé d'hémihydrate $\alpha$ et d'anhydrite II a été repulpé dans la cuve 1 de la deuxième étape avec des liquides provenant du filtre 30 et les 20 % restant de la bouillie.

Dans les cuves de la deuxième étape les conditions de température, de concentration en $H_2SO_4$ et de concentration en $P_2O_5$ ont successivement été réglées pour obtenir de l'hémihydrate $\alpha$ et de l'anhydrite II à raison de 20 % du sulfate de calcium total.

Ainsi, la température a été maintenue à 68° C par refroidissement. La teneur en matières solides a été ramenée à 26 % par recyclage des liquides provenant du filtre 30, la teneur en $P_2O_5$ a été maintenue à 32 % dans l'acide phosphorique et la teneur en acide sulfurique libre a été maintenue à 15 %.

Le débit de base à la deuxième étape était de 11 $m^3$ avec une rétention de 3 heures dans le volume réactionnel, une circulation générale de 2500 % et une circulation sur l'évaporateur réglée à 4000 %. Le gâteau de filtration contenant de l'hémihydrate $\alpha$ et de l'anhydrite II déchargé au filtre 30 contenait 0,65 % de $P_2O_5$ et 4,6 % $H_2O_C$ sur base du produit séché à 250° C, la teneur en humidité du gâteau étant de 28 %.

Dans un deuxième test, la totalité du débit de base de la bouillie provenant de la premières étape a été conduite vers le filtre 7 et le gâteau d'hémihydrate $\alpha$ et d'anhydrite II obtenu a été converti, dans la deuxième étape, en dihydrate et anhydrite II (10 % du sulfate de calcium total) par abaissement de la température à 45° C.

Les autres conditions opératoires étaient les suivantes : teneur en matières solides dans la bouillie : 48 % ; teneur en $P_2O_5$ : 17 % et teneur en $H_2SO_4$ : 13 %. Le débit de base était de 5,5 $m^3$ avec une durée de rétention dans les zones réactionnelles de 12 heures, une circulation générale de 2500 % et une circulation sur l'évaporateur réglée à 3500 %. Le gâteau de filtration déchargé au filtre 30 était essentiellement formé de dihydrate et d'anhydrite II contenant 0,35 % de $P_2O_5$, 17,6 % $H_2O_C$ (sur base d'un produit séché à 250° C), et une teneur en humidité de 32 %.

Les différents tests des exemples précités ont été effectués dans une installation pilote d'une capacité de 20 kg de $P_2O_5$ en 24 heures.

Dans les exemples, on fait usage, au premier test de trois cuves de réaction, au deuxième est de deux cuves dans les première et deuxième étapes, et au troisième test de deux cuves dans la première étape et d'une cuve dans la deuxième étape.

**Revendications**

1. Procédé de préparation d'acide phosphorique et de sulfate de calcium contenant de l'anhydrite II comme sous-produit, suivant lequel on soumet, dans une bouillie contenant du sulfate de calcium en circulation à travers une succession de zones réactionnelles, du phosphate de calcium à une attaque par un mélange d'acides sulfurique et phosphorique avec séparation de sulfate de calcium et extraction d'au moins une partie de l'acide phosphorique de production, ce procédé étant caractérisé en ce qu'on l'effectue en au moins deux étapes, dans chacune desquelles on règle les débits de la bouillie en circulation, par rapport à un débit de base de la bouillie correspondant au débit évacué de la dernière zone réactionnelle, selon les prescriptions suivantes :

   - une circulation générale en circuit fermé au travers les zones réactionnelles à un taux compris entre 300 et 4000 % du débit de base,
   - une circulation au travers une zone de refroidissement sous vide à un taux compris entre 2000 et 4000 % de ce même débit de base, cette zone de refroidissement, dans laquelle règne une pression réduite inférieure à celle qui règne au-dessus de la bouillie des zones réactionnelles, étant en communication avec au moins une de ces dernières, cette pression réduite produisant une évaporation partielle contrôlée de l'eau incluse dans la solution d'acide phosphorique contenue dans la bouillie, d'où résulte dans cette dernière une chute de température contrôlée,
   - des circulations locales dans les zones réactionnelles à des taux compris chacun entre 500 et 2000 % du même débit de base,

- la somme de la circulation générale et de la circulation locale supérieure ou égale à 2500 % du débit de base dans chacune des zones où sont ajoutés des réactifs ainsi que dans la zone qui suit immédiatement chacune d'elles dans le circuit de circulation générale,

et en ce qu'on maintient dans les zones réactionnelles un acide phosphorique avec une concentration en $P_2O_5$ entre 15 et 52 %, une teneur en matières solides comprise entre 15 et 62 % et un temps de séjour ou de réaction entre 1 et 23 heures et en ce qu'on maintient en plus dans une première partie de la succession des zones réactionnelles précitées de la première étape, dans laquelle du phosphate tricalcique est introduit, une température comprise entre 75 et 85°C, de préférence entre 78 et 82°C, et une concentration en acide sulfurique entre 0,25 et 0,85 %, de manière à réaliser l'attaque pratiquement complète de ce phosphate tricalcique et en ce qu on maintient dans une deuxième partie subséquente, communiquant avec la première partie des zones réactionnelles, une température comprise entre 65 et 75°C et une concentration en acide sulfurique comprise entre 1 et 2,5 %, de manière à solubiliser du $P_2O_5$, combiné aux ions $Ca^{++}$, sous forme d'ions $HPO_4^{--}$ et/ou $H_2PO_4^{-}$, en ce qu'on effectue dans la deuxième étape un traitement ultérieur dans les conditions suivantes :

a) une température comprise entre 30 et 80°C, une concentration en $P_2O_5$ entre 15 et 20 % et une concentration en acide sulfurique comprise entre 4 et 15 %, de manière à obtenir du sulfate de calcium, comme sous-produit, essentiellement sous forme de dihydrate contenant entre 2 et 30 % d'anhydrite II, par une recristallisation d'hémihydrate $\alpha$ ou par une cristallisation inchangée ;

b) une température comprise entre 30 et 75°C, une concentration en $P_2O_5$ entre 15 et 20 % et une concentration en acide sulfurique entre 12 et 25 %, de manière à obtenir du sulfate de calcium, comme sous-produit, essentiellement sous forme d'anhydrite II, par une recristallisation de dihydrate ; ou

c) une température comprise entre 75 et 95°C, une concentration en $P_2O_5$ entre 22 et 35 % et une concentration en acide sulfurique comprise entre 4 et 15 %, de manière à obtenir du sulfate de calcium, comme sous-produit, essentiellement sous forme d'hémihydrate $\alpha$ contenant entre 2 et 30 % d'anhydrite II, par une recristallisation de dihydrate ou par une cristallisation inchangée de l'hémihydrate $\alpha$ ;

les conditions de réaction étant par ailleurs réglées de manière à obtenir un acide phosphorique de production présentant une concentration en $P_2O_5$ comprise entre 33 et 52 % et en $H_2SO_4$ comprise entre 0,25 et 2,5 %.

2. Procédé suivant la revendication 1, caractérisé en cequ'on opère, au cours de la deuxième étape, dans les conditions de réaction suivantes :

- une température comprise entre 30 et 60°C, de préférence 40 à 45°C,
- un acide phosphorique avec une concentration en $P_2O_5$ entre 17 à 20
- une concentration en acide sulfurique comprise entre 8 et 18 %, de préférence entre 2 à 15 %,
- une teneur en matières solides comprise entre 32 et 62 %, de préférence entre 45 à 58 %, et
- un temps de réaction ou de séjour compris entre 3 et 18 heures, de préférence 6 à 12 heures, de manière à obtenir essentiellement du dihydrate et une teneur en anhydrite II comprise entre 5 et 30 %, de préférence 5 à 20 %, du sulfate de calcium produit.

3. Procédé suivant la revendication 1, caractérisé en ce qu'on opère, au cours de la deuxième étape, dans les conditions de réaction suivantes :

- une température comprise entre 60 et 90°C, de préférence 75 à 80°C,
- un acide phosphorique avec une concentration en $P_2O_5$ comprise entre 26 et 35 %,
- une concentration en acide sulfurique comprise entre 10 et 15 %,
- une teneur en matières solides comprise entre 20 et 34 %, de préférence 24 à 30 %, et
- un temps de séjour ou de réaction entre 1 à 4 heures, de préférence 2 à 3 heures,

de manière à obtenir essentiellement de l'hémihydrate $\alpha$ et une teneur en anhydrite II comprise entre 5 et 30 %, de préférence de 20 à 30 %, du sulfate de calcium produit.

4. Procédé suivant l'une quelconque des revendications 1 à 3, caractérisé en ce que le sulfate de calcium séparé après la première étape est remise en suspension dans au moins une zone réactionnelle qui n'est pas traversée par la circulation générale, de manière à pouvoir contrôler dans cette zone les conditions de réaction sensiblement indépendamment de celles régnant dans les autres zones traversées par cette circulation générale.

5. Procédé suivant la revendication 4, caractérisé en ce que l'on maintient dans la zone non traversée par la circulation générale une teneur en $P_2O_5$ inférieure à celle régnant dans les autres zones, cette réduction en $P_2O_5$ étant compensée au moins partiellement par une addition d'acide sulfurique.

6. Procédé suivant l'une quelconque des revendications 1 à 5, caractérisé en ce qu'on recycle une partie de l'acide phosphorique de production vers les zones réactionnelles pour diluer la bouillie.

7. Procédé suivant l'une quelconque des revendications 1 à 6, caractérisé en ce qu'on lave au moins une partie du sulfate de calcium et en ce qu'on recycle au moins une partie de la phase liquide ainsi obtenue vers les zones réactionnelles.

8. Procédé suivant l'une quelconque des revendications 1 à 7, caractérisé en ce qu'on sépare, à la fin de la première étape, l'acide phosphorique de production et au moins une partie du sulfate de calcium de la bouillie et en ce qu'on recycle une partie de cet acide vers au moins une des zones réactionnelles de cette première étape pour diluer la bouillie, en ce qu'on met, dans la deuxième étape, le sulfate de calcium provenant de la première étape en suspension dans de l'acide sulfurique concentré et une partie des liquides soutirés à la deuxième étape, le sulfate de calcium obtenu à la deuxième étape étant à son tour séparé et la phase liquide obtenue étant recyclée vers les zones réactionnelles de la première étape.

9. Procédé suivant l'une quelconque des revendications 1 à 8, caractérisé en ce qu'on maintient au moins dans les deux parties précitées des zones réactionnelles une teneur en matières solides comprise entre 15 et 45 %, de préférence entre 20 et 45 %, et un temps de séjour ou de réaction entre 1 et 7 heures, de préférence entre 2 et 5 heures.

10. Procédé suivant l'une ou l'autre des revendications 8 ou 9, caractérisé en ce qu'on maintient dans les deux parties précitées des zones réactionnelles une concentration en $P_2O_5$ comprise entre 33 et 40 %, de préférence entre 35 et 38 %, et en ce qu'on règle les autres paramètres de ces zones dans les limites précitées, d'une manière telle à former essentiellement du dihydrate de sulfate de calcium.

11. Procédé suivant l'une ou l'autre des revendications 8 et 9, caractérisé en ce qu'on maintient dans les zones réactionnelles précitées une concentration en $P_2O_5$ supérieure à 40 %, notamment entre 40 et 52 %, et de préférence entre 40 et 46 %, et en ce qu'on règle les autres paramètres de ces zones dans les limites précitées d'une manière telle à former essentiellement de l'hémihydrate de sulfate de calcium.

12. Procédé suivant l'une quelconque des revendications 8 à 11, caractérisé en ce que les zones réactionnelles de chacune des deux parties précitées sont raccordées entre elles suivant un circuit fermé.

13. Procédé suivant l'une quelconque des revendications 8 à 12, caractérisé en ce que chacune des deux parties précitées des zones réactionnelles comprend au moins une zone de refroidissement.

14. Procédé suivant l'une quelconque des revendications 1 à 13, caractérisé en ce qu'on sépare, de préférence par filtration, au moins une partie du sulfate de calcium obtenu, après les zones réactionelles de la deuxième partie, en ce qu'on soumet ce sulfate, au cours d'une deuxième étape, à un repulpage et un traitement subséquent avec la partie éventuelle non séparée du sulfate de calcium obtenu et avec du liquide contenant de l'acide phosphorique et de l'acide sulfurique et en ce qu'ensuite on sépare, également de préférence par filtration, le sulfate de calcium obtenu après ce traitement subséquent.

15. Procédé suivant l'une quelconque des revendications 1 à 14, caractérisé en ce qu'on recycle tout au plus 10 %, de préférence 0 %, de la bouillie sortant de la deuxième partie précitée des zones réactionnelles vers la première partie précitée.

16. Procédé suivant l'une quelconque des revendications 1 à 15, caractérisé en ce qu'on contrôle la forme et la taille des cristaux de sulfate de calcium en ajoutant de la silice active et/ou de l'alumine dans une zone réactionnelle où a lieu l'introduction du phosphate de calcium à traiter ou dans une ou plusieurs zones voisines à cette zone.

17. Procédé suivant l'une quelconque des revendications 1 à 16, caractérisé en ce que l'on introduit dans les zones réactionnelles du phosphate de calcium dont au moins 95 % présente une granulométrie < à 0,5 mm et 60 à 70 % des grains de préférence inférieure ou égale à 0,150 mm.

## Claims

1. Process for the preparation of phosphoric acid and calcium sulphate containing anhydrite II as by-product, according to which calcium phosphate, in a slurry containing calcium sulphate travelling through a series of reaction zones, is subjected to digestion with a mixture of sulphuric and phosphoric acids with separation of calcium sulphate and extraction of at least a proportion of the phosphoric acid output, this process being characterised in that it is carried out in at least two stages, in each of which the flow rates of the circulating slurry are regulated in relation to a base slurry flow rate corresponding to the flow rate discharged from the last reaction zone, according to the following stipulations:

   - a general circulation in a closed circuit through the reaction zones at a rate of between 300 and 4000 % of the base flow rate,
   - a circulation through a vacuum cooling zone at a rate of between 2000 and 4000 % of this same base flow rate, this cooling zone, in which there prevails a reduced pressure lower than that which prevails above the slurry in the reaction zones, being in communication with at least one of the latter, this reduced pressure producing a controlled partial evaporation of the water included in the phosphoric acid solution contained in the slurry, resulting in a controlled temperature drop in the latter,
   - local circulations in the reaction zones at rates each of which is between 500 and 2000 % of the same base flow rate,
   - the sum of the general circulation and of the local circulation greater than or equal to 2500 % of the base flow rate in each of the zones where reactants are added and in the zone which immediately follows each of these zones in the general circulation circuit,

   and in that a phosphoric acid with a $P_2O_5$ concentration of between 15 and 52 %, a solids content of between 15 and 62 % and a residence or reaction time of between 1 and 23 hours are maintained in the reaction zones and in that, in addition, a temperature of between 75 and 85 °C, preferably between 78 and 82 °C and a sulphuric acid concentration of between 0.25 and 0.85 % are maintained in a first part of the series of the abovementioned reaction zones of the first stage, into which tricalcium phosphate is introduced, so as to produce a practically complete digestion of the tricalcium phosphate and in that a temperature of between 65 and 75 °C and a sulphuric acid concentration of between 1 and 2.5 % are maintained in a subsequent second part communicating with the first part of the reaction zones, so as to solubilise the $P_2O_5$ combined with the $Ca^{++}$ ions, in the form of $HPO_4^{--}$ and/or $H_2PO_4^{-}$ ions, and in that a subsequent treatment is carried out in the second stage under the following conditions:

   a) a temperature of between 30 and 80 °C, a $P_2O_5$ concentration of between 15 and 20 % and a sulphuric acid concentration of between 4 and 15 %, so as to obtain calcium sulphate, as by-product, essentially in the form of dihydrate containing between 2 and 30 % of anhydrite II, by a recrystallisation of a hemihydrate or by an unchanged crystallisation;

   b) a temperature of between 30 and 75 °C, a $P_2O_5$ concentration of between 15 and 20 % and a sulphuric acid concentration of between 12 and 25 %, so as to obtain calcium sulphate, as by-product, essentially in the form of anhydrite II, by a recrystallisation of dihydrate; or

   c) a temperature of between 75 and 95 °C, a $P_2O_5$ concentration of between 22 and 35 % and a sulphuric acid concentration of between 4 and 15 %, so as to obtain calcium sulphate, as by-product, essentially in the form of $\alpha$ hemihydrate containing 2 and 30 % of anhydrite II, by a recrystallisation of dihydrate or by an unchanged crystallisation of $\alpha$ hemihydrate; the reaction conditions being furthermore regulated so as to obtain a phosphoric acid output which has a concentration of $P_2O_5$ of between 33 and 52 % and of $H_2SO_4$ of between 0.25 and 2.5 %.

2. Process according to Claim 1, characterised in that during the second stage the operation is carried out under the following reaction conditions:

   - a temperature of between 30 and 60 °C, preferably 40 to 45 °C,
   - a phosphoric acid with a $P_2O_5$ concentration of between 17 to 20 %,
   - a sulphuric acid concentration of between 8 and 18 %, preferably between 2 and 15 %,
- a solids content of between 32 and 62 %, preferably between 45 to 58 %, and
- a reaction or residence time of between 3 and 18 hours, preferably 6 to 12 hours, so as to obtain essentially dihydrate and an anhydrite II content of between 5 and 30 %, preferably 5 to 20 %, of the calcium sulphate produced.

3. Process according to Claim 1, characterised in that during the second stage the operation is carried out under the following reaction conditions:
- a temperature of between 60 and 90 °C, preferably 75 to 80 °C,
- a phosphoric acid with a $P_2O_5$ concentration of between 26 and 35 %,
- a sulphuric acid concentration of between 10 and 15 %,
- a solids content of between 20 and 34 %, preferably 24 to 30 %, and
- a residence or reaction time of between 1 to 4 hours, preferably 2 to 3 hours, so as to obtain essentially α hemihydrate and an anhydrite II content of between 5 and 30 %, preferably from 20 to 30 %, of calcium sulphate produced.

4. Process according to any one of Claims 1 to 3, characterised in that the calcium sulphate separated after the first stage is resuspended in at least one reaction zone through which the general circulation does not pass, so as to enable the reaction conditions in this zone to be controlled substantially independently of those prevailing in the other zones through which this general circulation passes.

5. Process according to Claim 4, characterised in that a $P_2O_5$ content which is lower than that prevailing in other zones is maintained in the zone through which the general circulation does not pass, this reduction in $P_2O_5$ being at least partially compensated by an addition of sulphuric acid.

6. Process according to any one of Claims 1 to 5, characterised in that a proportion of the phosphoric acid output is recycled towards the reaction zones to dilute the slurry.

7. Process according to any one of Claims 1 to 6, characterised in that at least a proportion of the calcium sulphate is washed and in that at least a proportion of the liquid phase thus obtained is recycled towards the reaction zones.

8. Process according to any one of Claims 1 to 7, characterised in that at the end of the first stage, the phosphoric acid output and at least a proportion of the calcium sulphate are separated from the slurry and in that a proportion of this acid is recycled towards at least one of the reaction zones of this first stage to dilute the slurry, in that, in the second stage, the calcium sulphate originating from the first stage is suspended in concentrated sulphuric acid and a proportion of the liquids withdrawn from the second stage, the calcium sulphate obtained at the second stage being in its turn separated off and the liquid phase obtained being recycled towards the reaction zones of the first stage.

9. Process according to any one of Claims 1 to 8, characterised in that a solids content of between 15 and 45 %, preferably between 20 and 45 %, and a residence or reaction time of between 1 and 7 hours, preferably between 2 and 5 hours, are maintained at least in the abovementioned two parts of the reaction zones.

10. Process according to either of Claims 8 and 9, characterised in that a $P_2O_5$ concentration of between 33 and 40 %, preferably between 35 and 38 %, is maintained in the abovementioned two parts of the reaction zones, and in that the other parameters of these zones are regulated within the abovementioned limits, so as to form essentially calcium sulphate dihydrate.

11. Process according to either of Claims 8 and 9, characterised in that a $P_2O_5$ concentration of more than 40 %, especially between 40 and 52 %, and preferably between 40 and 46 %, is maintained in the abovementioned reaction zones, and in that the other parameters of these zones are regulated within the abovementioned limits so as to form essentially calcium sulphate hemihydrate.

12. Process according to any one of Claims 8 to 11, characterised in that the reaction zones of each of the abovementioned two parts are connected together as a closed circuit.

13. Process according to any one of Claims 8 to 12, characterised in that each of the abovementioned two parts of the reaction zones comprises at least one cooling zone.

14. Process according to any one of Claims 1 to 13, characterised in that at least a proportion of the calcium sulphate obtained is separated off, preferably by filtration, after the reaction zones of the second part, and in that this sulphate is subjected during a second stage to a reslurrying operation and to a subsequent treatment with the optional unseparated proportion of the calcium sulphate obtained and with liquid containing phosphoric acid and sulphuric acid and in that the calcium sulphate obtained after this subsequent treatment is separated off, also preferably by filtration.

15. Process according to any one of Claims 1 to 14, characterised in that at most 10 %, preferably 0 %, of the slurry leaving the abovementioned second part of the reaction zones is recycled towards the abovementioned first part.

16. Process according to any one of Claims 1 to 15, characterised in that the form and the size of the calcium sulphate crystals are controlled by adding active silica and/or alumina in the reaction zone where the entry of the calcium phosphate to be treated takes place or in one or more zones in the vicinity of this zone.

17. Process according to any one of Claims 1 to 16, characterised in that calcium phosphate of which at least 95 % has a particle size < 0.5 mm and 60 to 70 % of the particles are preferably smaller than or equal to 0.150 mm is introduced into the reaction zones.

**Ansprüche**

1. Verfahren zur Herstellung von Phosphorsäure und Calciumsulfat, das Anhydrit II als Nebenprodukt enthält, in dem man in einem Calciumsulfat enthaltenden Brei Calciumphosphat im Kreislauf durch eine Folge von Reaktionszonen einem Angriff durch eine Mischung aus Schwefelsäure und Phosphorsäure unterwirft, wobei man Calciumsulfat abtrennt und wenigstens einen Teil der Produkt-Phosphorsäure extrahiert, wobei das Verfahren dadurch gekennzeichnet ist, daß man es in wenigstens zwei Schritten durchführt, wobei man in jedem der beiden Schritte die Menge des Breis im Kreislauf, bezogen auf eine Grundmenge des Breis, die der evakuierten Menge der letzten Reaktinszone entspricht, gemäß den folgenden Vorschriften einstellt:

- ein allgemeiner Kreislauf im geschlossenen Kreis durch die Reaktionszonen in einer Prozentmenge zwischen 300 und 4.000 % der Grundmenge,
- ein Kreislauf durch eine Kühlzone unter Vakuum in einer Prozentmenge zwischen 2.000 und 4.000 % dieser selben Grundmenge, wobei diese Kühlzone, in der ein reduzierter Druck unterhalb des Drucks herrscht, der über dem Brei der Reaktionszonen herrscht, in Verbindung mit wenigstens einer der letztgenannten Zonen steht, wobei dieser reduzierte Druck zu einer partiellen kontrollierten Verdampfung des Wassers führt, das in der in dem Brei enthaltenen Phosphorsäurelösung eingeschlossen ist, woraus in dieser letztgenannten Zone ein kontrolliertes Absinken der Temperatur resultiert,
- lokale Kreisläufe in den Reaktionszonen in einer Menge jeweils zwischen 500 und 2.000 % derselben Grundmenge,
- die Summe des allgemeinen Kreislaufs und des lokalen Kreislaufs ist in jeder der Zonen, denen Reaktanden zugeführt wurden, sowie in der Zone, die im Kreis des allgemeinen Kreislaufs unmittelbar jeder dieser Zonen folgt, größer oder gleich 2.500 % der Grundmenge,

und wobei das Verfahren dadurch gekennzeichnet ist, daß man in den Reaktionszonen eine Phosphorsäure mit einer Konzentration an $P_2O_5$, zwischen 5 und 52 %, einen Gehalt an Feststoffen zwischen 15 und 62 % und eine Aufenthaltszeit oder Reaktionszeit zwischen 1 und 23 Stunden aufrechterhält, und daß man darüberhinaus in einem ersten Teil der Folge der vorgenannten Reaktionszonen des ersten Schritts, in die Tricalciumphosphat eingeführt wird, eine Temperatur zwischen 75 und 85 °C, vorzugsweise zwischen 78 und 82 °C, und eine Schwefelsäurekonzentration zwischen 0,25 und 0.85 % einhält, so daß man einen praktisch vollständigen Angriff auf das Tricalciumphosphat ausführt, umd daß man in einem zweiten folgenden Teil, der mit dem ersten Teil der Reaktionszonen in Verbindung steht, eine Temperatur zwischen 65 und 75 °C und eine Schwefelsäurekonzentration zwischen 1 und 2,5 % einhält, so daß man das mit $Ca^{++}$-Ionen kombinierte $P_2O_5$ in Form von $HPO_4^{--}$- und/oder $H_2PO_4^{-}$-Ionen löst, und daß man im zweiten Schritt eine Folgebehandlung unter folgenden Bedingungen durchführt:

(a) eine Temperatur zwischen 30 und 80 °C, eine Konzentration an $P_2O_5$ zwischen 15 und 20 % und eine Konzentration an Schwefelsäure zwischen 4 und 15 %, so daß man Calciumsulfat als Nebenprodukt vor allem in Form des Dihydrats, das zwischen 2 und 30 % Anhydrit II enthält, durch Umkristallisation des α-Hemihydrats oder durch unveränderte Kristallisation erhält;

(b) eine Temperatur zwischen 30 und 75 °C, eine Konzentration an $P_2O_5$ zwischen 15 und 20 % und eine Konzentration an Schwefelsäure zwischen 12 und 25 %, so daß man Calciumsulfat als Nebenprodukt vor allem in Form des Andydrids II durch eine Umkristallisation des Dihydrats erhält; oder

(c) eine Temperatur zwischen 75 und 95 °C, eine Konzentration an $P_2O_5$ zwischen 22 und 35 % und eine Konzentration an Schwefelsäure zwischen 4 und 15 %, so daß man Calciumsulfat als Nebenprodukt vor allem in Form des α-Hemihydrats, das zwischen 2 und 30 % Anhydrit II enthält, durch eine Umkristallisation des Dihydrats oder durch eine unveränderte Kristallisation des α-Hemihydrats erhält, wobei die Reaktionsbedingungen außerdem in der Weise eingerichtet werden, daß man eine Produkt-Phosphorsäure erhält, die eine Konzentration an $P_2O_5$ zwischen 33 und 52 % und einen Gehalt an $H_2SO_4$ zwischen 0,25 und 2,5 % aufweist.

2. Verfahren nach Anspruch 1, dadurch gekennzeichnet daß man im Verlauf des zweiten Schritts unter folgenden Reaktionsbedingungen arbeitet:
- eine Temperatur zwischen 30 und 60 °C, vorzugsweise 40 bis 45 °C;
- eine Phosphorsäure mit einer Konzentration an $P_2O_5$ zwischen 17 und 20 %;
- eine Konzentration an Schwefelsäure zwischen 8 und 18 %, vorzugsweise zwischen 2 und 15 %;
- einen Gehalt an Feststoffen zwischen 32 und 62 %, vorzugsweise zwischen 45 und 58 %; und
- eine Reaktionszeit oder Aufenthaltszeit zwischen 3 und 18 Stunden, vorzugsweise 6 bis 12 Stunden,

so daß man vor allem das Dihydrat und einen Gehalt an Anhydrit II zwischen 5 und 30 %, vorzugsweise 5 bis 20 %, des hergestellten Calciumsulfats erhält.

3. Verfahren nach Anspruch 1, dadurch gekennzeichnet, daß man im Verlauf des zweiten Schritts unter folgenden Reaktionsbedingungen arbeitet:
- eine Temperatur zwischen 60 und 90 °C, vorzugsweise 75 bis 80 °C;
- eine Phosphorsäure mit einer Konzentration an $P_2O_5$ zwischen 26 und 35 %;

- eine Konzentration an Schwefelsäure zwischen 10 und 15 %;
- einen Gehalt an Feststoffen zwischen 20 und 34 %, vorzugsweise 24 bis 30 %; und
- eine Aufenthaltszeit oder Reaktionszeit zwischen 1 und 4 Stunden, vorzugsweise 2 bis 3 Stunden,

so daß man vor allem das α-Hemihydrat und einen Gehalt an Anhydrit II zwischen 5 und 30 %, vorzugsweise 20 bis 30 %, des hergestellten Calciumsulfats erhält.

4. Verfahren nach irgendeinem der Ansprüche 1 bis 3, dadurch gekennzeichnet, daß das nach dem ersten Schritt abgetrennte Calciumsulfat in wenigstens einer Reaktionszone, die nicht von dem allgemeinen Kreislauf durchquert wird, wieder in Suspension gebracht wird, so daß man in dieser Zone die Reaktionsbedingungen kontrollieren kann, die deutlich unabhängig von den Bedingungen sind, die in den anderen Zonen herrschen, die von dem allgemeinen Kreislauf durchquert werden.

5. Verfahren nach Anspruch 4, dadurch gekennzeichnet, daß man in der nicht vom allgemeinen Kreislauf durchquerten Zone einen $P_2O_5$-Gehalt unterhalb des Gehalts aufrechterhält, der in den anderen Zonen herrscht, wobei diese Verringerung an $P_2O_5$ wenigstens teilweise durch einen Zusatz an Schwefelsäure kompensiert wird.

6. Verfahren nach irgendeinem der Ansprüche 1 bis 5, dadurch gekennzeichnet, daß man einen Teil der Produkt-Phosphorsäure in die Reaktionszonen zurückführt, um den Brei zu verdünnen.

7. Verfahren nach irgendeinem der Ansprüche 1 bis 6, dadurch gekennzeichnet, daß man wenigstens einen Teil des Calciumsulfats wäscht, und daß man wenigstens einen Teil der so erhaltenen flüssigen Phase in die Reaktionszonen zurückführt.

8. Verfahren nach irgendeinem der Ansprüche 1 bis 7, dadurch gekennzeichnet, daß man am Ende des ersten Schritts die Produkt-Phosphorsäure und wenigstens einen Teil des Calciumsulfats aus dem Brei abtrennt, und daß man einen Teil dieser Säure in wenigstens eine der Reaktionszonen dieses ersten Schritts zurückführt, um den Brei zu verdünnen, und daß man in dem zweiten Schritt das aus dem ersten Schritt stammende Calciumsulfat in der konzentrierten Schwefelsäure und einem Teil der bei dem zweiten Schritt abgezogenen Flüssigkeiten in Suspension bringt, wobei das im zweiten Schritt erhaltene Calciumsulfat bei dieser Gelegenheit abgetrennt und die erhaltene flüssige Phase in die Reaktionszonen des ersten Schritts zurückgeführt wird.

9. Verfahren nach irgendeinem der Ansprüche 1 bis 8, dadurch gekennzeichnet, daß man wenigstens in den beiden vorgenannten Reaktionszonen einen Gehalt an Feststoffen zwischen 15 und 45 %, vorzugsweise zwischen 20 und 45 %, und eine Aufenthaltszeit oder Reaktionszeit zwischen 1 und 7 Stunden, vorzugsweise zwischen 2 und 5 Stunden, einhält.

10. Verfahren nach dem einen oder anderen der Ansprüche 8 oder 9, dadurch gekennzeichnet, daß man in den beiden vorgenannten Reaktionszonen eine Konzentration an $P_2O_5$ zwischen 33 und 40 %, vorzugsweise zwischen 35 und 38 %, einhält, und daß man die anderen Parameter dieser Zonen in den vorgenannten Grenzen einreguliert, so daß man vor allem das Dihydrat des Calciumsulfats bildet.

11. Verfahren nach dem einen oder anderen der Ansprüche 8 und 9, dadurch gekennzeichnet, daß man in den vorgenannten Reaktionszonen eine Konzentration an $P_2O_5$ oberhalb von 40 %, insbesondere zwischen 40 und 52 %, und vorzugsweise zwischen 40 und 46 %, einhält, und daß man die anderen Parameter dieser Zonen in den vorgenannten Grenzen einreguliert, so daß man im wesentlichen Hemihydrat des Calciumsulfats bildet.

12. Verfahren nach irgendeinem der Ansprüche 8 bis 11, dadurch gekennzeichnet, daß die Reaktionszonen jeder der beiden vorgenannten Abschnitte untereinander zu einem geschlossenen Kreis verbunden sind.

13. Verfahren nach irgendeinem der Ansprüche 8 bis 12, dadurch gekennzeichnet, daß jeder der beiden vorgenannten Abschnitte der Reaktionszonen wenigstens eine Kühlzone umfaßt.

14. Verfahren nach irgendeinem der Ansprüche 1 bis 13, dadurch gekennzeichnet, daß man vorzugsweise durch Filtration wenigstens einen Teil des erhaltenen Calciumsulfats nach den Reaktionszonen des zweiten Abschnitts abtrennt, und daß man dieses Sulfat im Verlauf eines zweiten Schritts wiederaufschlämmt und nachfolgend mit dem eventuellen nichtabgetrennten Teil des erhaltenen Calciumsulfats und mit der Flüssigkeit, die die Phosphorsäure und die Schwefelsäure enthält, behandelt, und daß man danach, in gleicher Weise vorzugsweise durch Filtration, das erhaltene Calciumsulfat nach dieser Folgebehandlung abtrennt.

15. Verfahren nach irgendeinem der Ansprüche 1 bis 14, dadurch gekennzeichnet, daß man höchstens 10 %, vorzugsweise 0 %, des Breis, der den zweiten Bereich der vorgenannten Reaktionszonen verläßt, in den vorgenannten ersten Bereich zurückführt.

16. Verfahren nach irgendeinem der Ansprüche 1 bis 15, dadurch gekennzeichnet, daß man die Form und die Größe der Calciumsulfatkristalle dadurch kontrolliert, daß man aktive Kieselerde und/oder Aluminiumoxid in einer Reaktionszone oder an der Stelle der Zugabe des zu behandelnden Calciumphosphats oder in einer oder mehreren Zonen, die dieser Zone benachbart sind, zusetzt.

17. Verfahren nach irgendeinem der Ansprüche 1 bis 16, dadurch gekennzeichnet, daß man in die Reaktionszonen Calciumphosphat zuführt, von dem wenigstens 95 % eine Korngröße < 0,5 mm und 60 bis 70 % der Körner vorzugsweise unterhalb oder gleich 0,150 mm aufweisen.

# FIG.1

FIG. 2

EP 0 181 029 B1

FIG. 3

EP 0 181 029 B1

FIG.4.

24

FIG.5.